# EUROPÄISCHE PATENTSCHRIFT

(11) **EP 2 332 791 B1**
(45) Veröffentlichungstag und Bekanntmachung des Hinweises auf die Patenterteilung: **20.06.2012**
(21) Anmeldenummer: 10186922.0
(22) Anmeldetag: 08.10.2010
(51) Int. Cl.: B60S 1/04, B60S 1/38, B60S 1/40

(54) **Wischblatt mit einer Schwingungseinrichtung**
Wiper blade with an oscillation device
Lame d'essuyage dotée d'un dispositif d'oscillation

(30) Priorität: 08.12.2009 DE 102009047606
(43) Veröffentlichungstag der Anmeldung: 15.06.2011
(73) Patentinhaber: Robert Bosch GmbH, 70442 Stuttgart (DE)
(72) Erfinder: Trenkle, Lothar, 77833, Ottersweier (DE)

(56) Entgegenhaltungen:
- WO-A1-02/04264
- DE-U1-202004 019 608
- FR-A1- 2 876 969
- US-A- 6 028 291

## Beschreibung

Die Erfindung betrifft ein Wischblatt für eine Wischanlage zum Wischen einer Scheibe sowie eine Wischanlage mit einem Wischblatt.

### Stand der Technik

Wischanlagen werden in verschiedenen technischen Anwendungen verwendet, insbesondere zum Wischen von Front- und Heckscheiben von Kraftfahrzeugen. Derartige Wischanlagen umfassen wenigstens ein an einem Wischarm befestigtes Wischblatt mit einer Wischlippe aus einem Gummimaterial, welche zyklisch über die zu reinigende Scheibe geführt wird, um Feuchtigkeit oder Schmutz von der Scheibenoberfläche zu entfernen. Als Antrieb für den Wischarm dient in der Regel ein Elektromotor, z. B. ein Rundläufermotor oder Reversier-Wischermotor, dessen Bewegung entweder direkt oder über ein entsprechendes Getriebe in die gewünschte Wischbewegung umgesetzt wird.

Die Wischbewegung des Wischers über die Scheibe ist mit einer Reibung verbunden, die je nach Feuchtigkeitszustand der Scheibe stark variiert. Im nassen Zustand ist die Reibung relativ gering, während im trockenen Zustand eine relativ hohe Reibung überwunden werden muss. Dies beeinflusst die zum Antrieb erforderliche Leistung beziehungsweise das dafür erforderliche Drehmoment des Wischantriebs. Während für den eigentlichen Einsatzzweck "Wischbetrieb bei Regen" eine kleine Antriebsleistung beziehungsweise ein kleines Antriebsmoment nötig ist, muss die Wischanlage auch für den Belastungsfall "Wischbetrieb auf trockener Scheibe" ausgelegt sein. Bekannte Wischanlagen werden daher deutlich stärker ausgelegt, als dies für den Einsatz auf nasser Scheibe erforderlich wäre.

Ein gattungsgemäßes Wischblett ist aus dem Dokument WO-A-02/04264 bekannt.

### Offenbarung der Erfindung

Es ist Aufgabe der Erfindung eine Lösung für ein verbessertes Wischen einer Scheibe bereitzustellen.

Dieser Aufgabe wird durch ein Wischblatt gemäß Anspruch 1 sowie durch eine Wischanlage gemäß Anspruch 10 gelöst. Weitere vorteilhafte Ausführungsformen der Erfindung sind in den abhängigen Ansprüchen angegeben.

Erfindungsgemäß wird ein Wischblatt für eine Wischanlage zum Wischen einer Scheibe vorgeschlagen.

Ferner ist gemäß der Erfindung auch eine Wischanlage mit einem solchen Wischblatt vorgesehen.

Durch die Schwingungsanregung kann die Reibung zwischen Wischblatt und Scheibe verringert werden. Dies ist insbesondere beim Wischbetrieb auf trockener Scheibe der Fall, und führt daher zu einem geringeren Reibungsunterschied (Streuung der Reibung) beim Wischbetrieb auf trockener und nasser Scheibe. Hieraus resultiert eine geringere Belastung im Wischbetrieb, was eine entsprechend kleinere Dimensionierung der Komponenten der Wischanlage, insbesondere eine schwächere Auslegung des Antriebsmotors und des Wischgestänges, erlaubt. Vorteile hiervon sind unter anderem eine Materialeinsparung und eine damit verbundene Kosten- und Gewichtsersparnis. Durch die Reduktion der Reibung kann ferner auch der Wischbetrieb als solcher und infolgedessen die Wischqualität verbessert werden.

In einer Ausführungsform ist die Schwingungseinrichtung ausgebildet, eine Schwingung mit wenigstens einer Frequenz im Ultraschall- und/oder Infraschall-Bereich zu erzeugen. Auf diese Weise können akustische Störungen eines Benutzers vermieden werden.

Erfindungsgemäß umfasst die Schwingungseinrichtung wenigstens ein Aktorelement. Das Aktorelement kann beispielsweise als kostengünstiges Piezoelemente ausgebildet sein. Hierbei können auch mehrere Piezoelement über die Länge des Wischblatt verteilt sein, wodurch eine relativ gleichmäßige Schwingungsanregung des Wischblatts realisiert werden kann.

Gemäß einer weiteren Ausführungsform weist das Wischblatt ein Basisteil mit einer Anschlusseinrichtung zum Befestigen an einem Wischarm und ein Wischlippenteil auf. Das Aktorelement kann dabei im Bereich des Basisteils, der Anschlusseinrichtung oder des Wischlippenteils angeordnet sein. Beispielsweise kann mithilfe eines im Bereich des Wischlippenteils angeordneten Aktorelements besonders effektiv eine Schwingung in dem die Scheibe kontaktierenden Bereich der Wischlippe erzielt werden.

In einer weiteren Ausführungsform umfasst das Wischblatt eine Energieversorgungseinrichtung für die Schwingungseinrichtung. Auf diese Weise ist ein unabhängiger bzw. autarker Betrieb der Schwingungseinrichtung möglich. Die Energieversorgungseinrichtung kann beispielsweise eine Batterie und/oder ein photovoltaisches Element umfassen.

Für eine autarke Betriebsweise umfasst das Wischblatt erfindungsgemäß eine Aktivierungseinrichtung. Die Aktivierungseinrichtung ist hierbei ausgebildet, eine Bewegung des Wischblatts zu erkennen und auf der Grundlage einer erkannten Bewegung die Schwingung des Wischblatts zu aktivieren.

Gemäß einer alternativen Ausführungsform weist das Wischblatt eine Schnittstelle zum Herstellen einer Verbindung zwischen der Schwingungseinrichtung und einer Steuereinrichtung der Wischanlage auf. Auf diese Weise kann sowohl eine Energieversorgung als auch eine Steuerung der Schwingungseinrichtung realisiert werden. Die Steuerung, d. h. insbesondere die Vorgabe der Intensität und der Frequenz der Schwingung, kann beispielsweise abhängig von äußeren Bedingungen (nass, trocken, Temperatur, etc.) sowie von einem durch einen Benutzer gewählten Betriebszustand (Intervallwischen, Dauerwischen, etc.) erfolgen.

Die Erfindung wird im Folgenden anhand der Figuren näher erläutert. Es zeigen:
Fig. 1 eine schematische Ansicht einer Wischanlage umfassend zwei Wischarme mit jeweils einem Wischblatt beim Wischen einer Scheibe;
Fig. 2 eine schematische Querschnittsdarstellung eines erfindungsgemäßen Wischblatts beim Wischen auf der Scheibe; und
Fig. 3 bis 6 weitere schematische Darstellungen von erfindungsgemäßen Wischblättern.

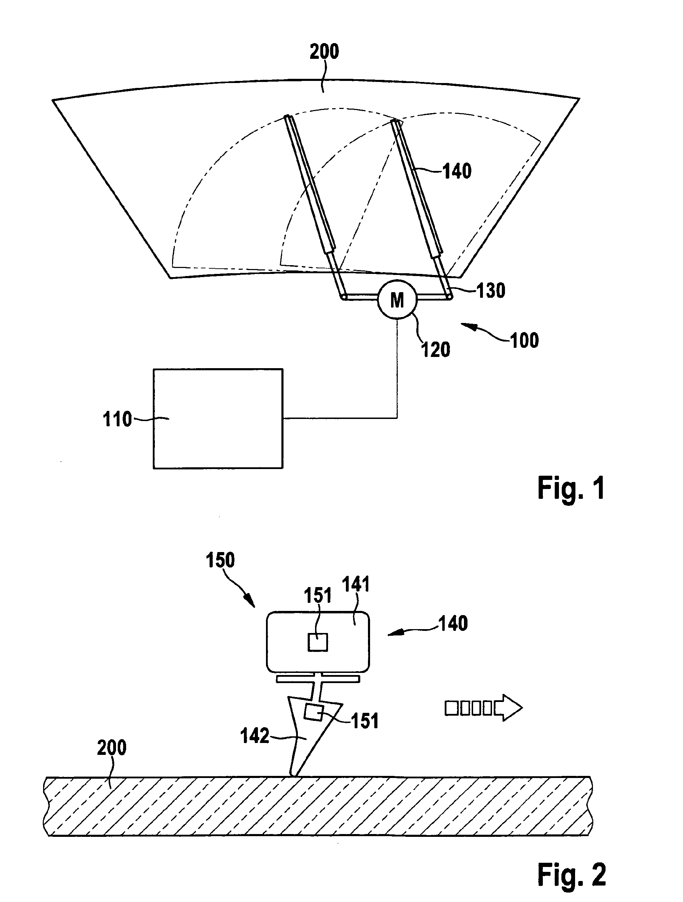

Die Figur 1 zeigt beispielhaft eine Wischanlage 100, wie sie in typischer Weise an einer Frontscheibe eines Kraftfahrzeugs zum Einsatz kommt. Alternativ ist eine derartige Wischanlage mit einem Wischarm auch für die Heckscheibe eines Fahrzeugs einsetzbar. Die Wischanlage 100 umfasst zwei Wischarme 130, welche jeweils mit einem daran befestigten Wischblatt 140 auf der zu reinigenden Scheibe 200 aufliegen. Die beiden Wischarme 130 werden vorliegend beispielsweise von einer gemeinsamen Antriebseinrichtung 120 angetrieben. Die Antriebseinrichtung 120 kann einen Rundläufermotor oder einen Reversier-Wischermotor umfassen, der direkt oder über ein geeignetes Getriebe (hier nicht gezeigt) mit dem jeweiligen Wischarm 130 gekoppelt ist. Im Wischbetrieb treibt die Antriebseinheit 120 die Wischarme 130 so an, dass die zugehörigen Wischblätter 140 zyklisch über die Oberfläche der Scheibe 200 streichen und dabei Belag wie z. B. Feuchtigkeit oder Schmutz von der Scheibenoberfläche entfernen.

Zum Steuern der Antriebseinrichtung 120 umfasst die Wischanlage 100 eine Steuereinrichtung 110. Die Steuereinrichtung 110 gibt vor, mit welcher Häufigkeit und Geschwindigkeit die Wischarme 130 über die Scheibe 200 bewegt werden. Dies kann beispielsweise auf der Grundlage einer über einen Lenkstockschalter festgelegten Benutzervorgabe oder einer beispielsweise von einem Regensensor übermittelten Information erfolgen (hier nicht gezeigt).

In erfindungsgemäßer Weise ist vorgesehen, dass jedes der beiden in Figur 1 gezeigten Wischblätter 140 mit einer Schwingungseinrichtung 150 zur Anregung einer Schwingung des jeweiligen Wischblatts 140 ausgestattet ist. Auf diese Weise kann eine geringere Reibung zwischen dem betreffenden Wischblatt 140 und der Scheibe 200 erzielt werden, was sich insbesondere beim Wischbetrieb auf trockener Scheibe 200 bemerkbar macht. Dies führt daher zu einem geringeren Reibungsunterschied für die Fälle Wischbetrieb auf trockener und auf nasser Scheibe 200, wodurch die Möglichkeit gegeben ist, die Wischanlage 100 für eine geringere Belastung auszulegen. So ist es beispielsweise möglich, einen Wischermotor mit geringerer Antriebsleistung beziehungsweise einem geringeren Drehmoment zu verwenden. Hiermit verbunden ist eine Materialeinsparung, und damit geringere Herstellungskosten und ein geringeres Gewicht. Des Weiteren ist eine kleinere Baugröße des Motors möglich, was mit einer effektiveren Ausnutzung des zur Verfügung stehenden Bauraums einhergehen kann. Ferner können auch - ohne Performanceeinbußen - weitere mechanische Komponenten der Wischanlage 100, wie z. B. das Wischgestänge, die Wischhebel oder die Wischarme 130 geringer bzw. schwächer dimensioniert werden. Auch hierdurch wird eine Gewichts-/Kostenersparnis erzielt. Eine Schwingungsanregung kann darüber hinaus dazu beitragen, den Wischbetrieb und infolgedessen die Wischqualität bei trockener, halbtrockener, und nasser Scheibe 200 zu verbessern. Anhand der folgenden Figuren werden mögliche Ausführungsformen eines Wischblatts 140 mit einer solchen Schwingungseinrichtung 150 näher beschrieben.

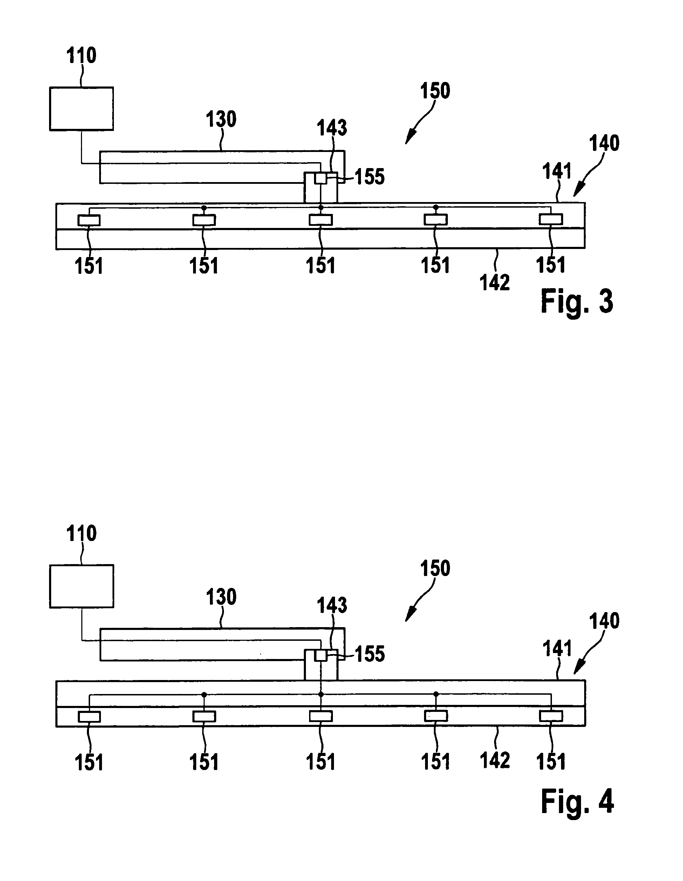

Die Figur 2 zeigt eine schematische Querschnittsdarstellung eines Wischblatts 140 beim Wischen der Scheibe 200. Hierbei handelt es sich beispielsweise um ein gelenkfreies Wischblatt 140 (GWB), bei dem ein flexibles Wischlippenteil 142 an einem starren Basisteil 141 befestig ist. Das Basisteil 141 ist beispielsweise in Form einer Schiene ausgebildet und weist eine Befestigungs- bzw. Anschlusseinrichtung 143 zum Befestigen an einem zugehörigen Wischarm 130 auf (vgl. z. B. Figur 3). Das vorzugsweise aus einem Gummimaterial gebildete Wischlippenteil 142 umfasst üblicherweise eine keilförmige Wischlippe, die im Wischbetrieb an der Scheibe 200 anliegt. Des Weiteren kann, wie in der Figur 2 dargestellt, das sich entlang des schienenförmigen Basisteils 141 erstreckende Wischlippenteil 142 ferner über Anschlagstege zur Begrenzung der Wischlippenbewegung verfügen.

Um eine Schwingung des Wischblatts 140 zu erzeugen, weist das Wischblatt 140 erfindungsgemäß eine Schwingungseinrichtung 150 mit wenigstens einem Aktorelement 151 auf. Ein solches Aktorelement 151, das vorzugsweise piezoelektrisch ausgebildet ist, kann grundsätzlich in verschiedenen Bereichen des Wischblatts 140 angeordnet sein. In Figur 2 sind beispielhaft zwei mögliche Einbaupositionen gezeigt, und zwar im Bereich des Basisteils 141 sowie im Bereich des Wischlippenteils 142. Das gezeigte Aktorelement 151 kann sich dabei sowohl über einen Teilbereich als auch kontinuierlich über die gesamte Länge des Basisteils 141 oder des Wischlippenteils 142 des Wischblatts 140 erstrecken. Ferner ist es auch möglich, ein oder mehrere Aktorelemente 151 sowohl im Basisteil 141 als auch im Wischlippenteil 142 vorzusehen.

Mithilfe eines Aktorelements 151 kann grundsätzlich eine Schwingung mit einer beliebigen Schwingungsfrequenz erzeugt werden. Vorzugsweise wird dabei eine Schwingung mit einer Frequenz im Bereich des Ultra- bzw. Infraschalls erzeugt, um eine akustische Störung eines Benutzers bzw. Fahrers zu vermeiden.

Bei der Auswahl einer geeigneten Schwingungsfrequenz kann ferner das Resonanzverhalten des mechanischen Systems beziehungsweise Wischblatts 140 berücksichtigt werden, um beispielsweise eine Resonanzverstärkung bewirkt werden. Ferner können mithilfe eines oder mehrerer Aktorelemente 151 gleichzeitig mehrere sich überlagernde Schwingungen unterschiedlicher Frequenzen angeregt werden, wodurch zum Beispiel eine Amplitudenverstärkung bewirkt werden kann.

Die Anregung einer Schwingung mithilfe eines Aktorelements 151 kann räumlich grundsätzlich in jeder beliebigen Richtung erfolgen. Vorzugsweise erfolgt die Schwingungsanregung jedoch parallel zur Bewegungsrichtung des Wischblatts 140 auf der Scheibe 200. Dieser Fall ist mithilfe eines unterbrochenen Pfeils in Figur 2 angedeutet. Hierdurch kann die Reibung zwischen Wischlippe und Scheibe 200 besonders effektiv reduziert werden.

Bei dem in der Figur 2 dargestellten Wischblatt 140 kann das Aktorelement bzw. können die Aktorelemente 151 mit der Steuereinrichtung 110 der Wischanlage 100 über entsprechende Verbindungsleitungen verbunden sein. Hierdurch kann sowohl eine Energieversorgung, als auch eine Steuerung des bzw. der Aktorelemente 151 erfolgen. Ein solcher Fall wird im Detail anhand der folgenden Figur 3 näher erläutert.

Figur 3 zeigt ein weiteres mögliches Ausführungsbeispiel der Erfindung. Das hier gezeigte Wischblatt 140 ist mittels einer Anschlusseinrichtung 143 des Basisteils 141 in einer entsprechend ausgebildeten Aufnahmeeinrichtung eines Wischarms 130 befestigt. Das Wischblatt 140 weist beispielsweise fünf innerhalb des Basisteils 141 angeordnete piezoelektrische Aktorelemente 151 auf. Die vorzugsweise gleichmäßig entlang des Basisteils 141 verteilt angeordneten Aktorelemente 151 sind über entsprechende Verbindungsleitungen mit dem Bordnetz des betreffenden Fahrzeugs bzw. der Steuereinrichtung 110 der Wischanlage 100 verbunden.

Um eine lösbare Verbindung zwischen dem Wischblatt 140 und dem Wischarm 130 zu ermöglichen, ist, wie in der Figur 3 dargestellt, im Bereich der Anschlusseinrichtung 143 eine Schnittstelle 155 vorgesehen. Die Schnittstelle 155 kann beispielsweise in Form eines Steckers realisiert sein, welcher in einen im Bereich der Aufnahmeeinrichtung des Wischarms 130 angeordneten komplementären Stecker einsteckbar ist. Auf diese Weise ist ein einfacher Austausch beziehungsweise ein einfaches Nachrüsten des Systems möglich.

Durch die Verbindung der Aktorelemente 151 mit der Steuereinrichtung 110 kann sowohl eine externe Energieversorgung als auch eine externe Steuerung derselben realisiert werden, wobei die Aktorelemente 151 sowohl einzeln als auch gemeinsam angesteuert werden können. Die Steuereinrichtung 110 kann beispielsweise die Intensität und Frequenz der Schwingung eines Aktorelements 151 vorgeben. Derartige Vorgaben können beispielsweise abhängig von äußeren Bedingungen erfolgen, wodurch das Verhalten der Aktorelemente 151 bei trockener, halb-trockener und nasser Scheibe 200 und gegebenenfalls abhängig von zusätzlichen Parametern, wie zum Beispiel der Temperatur, unterschiedlich gestaltet werden kann. Beispielsweise ist es möglich, eine Schwingung des Wischblatts 140 nur bei trockener Scheibe 200 zu veranlassen, beziehungsweise bei trockener Scheibe 200 eine stärkere Schwingung (z. B. höhere Amplitude und/oder Frequenz) vorzusehen als bei nasser Scheibe 200. Entsprechende Informationen zu äußeren Bedingungen können der Steuereinrichtung 110 beispielsweise von anderen Einrichtungen, wie z. B. einem Regensensor oder Temperatursensor, bereitgestellt werden. Ferner kann der Betrieb der Aktorelemente 151 an eine Aktivierung der Wischanlage 100 mittels Benutzereingabe, beispielsweise über einen Lenkstockhebel, gekoppelt sein. Hierbei ist es beispielsweise möglich, dass die Steuereinrichtung 110 je nach gewählten Wischbetrieb (Intervallwischen, Dauerwischen in Stufe 1 oder Stufe 2, etc.) verschiedene Schwingungsmodi für die Aktorelemente 151 vorsieht.

Figur 4 zeigt ein weiteres Ausführungsbeispiel eines erfindungsgemäßen Wischblatts 140, welches einen zu dem Ausführungsbeispiel von Figur 3 analogen Aufbau aufweist. Im Unterschied zu dem Wischblatt 140 von Figur 3 sind die Aktorelemente 151 bei dem in der Figur 4 gezeigten Wischblatt 140 innerhalb des Wischlippenteils 142 anstatt innerhalb des Basisteils 140 angeordnet. Auf diese Weise kann die Schwingung direkter und gegebenenfalls effizienter in den Kontaktbereich zwischen der Wischlippe 142 und der Scheibe 200 eingekoppelt werden.

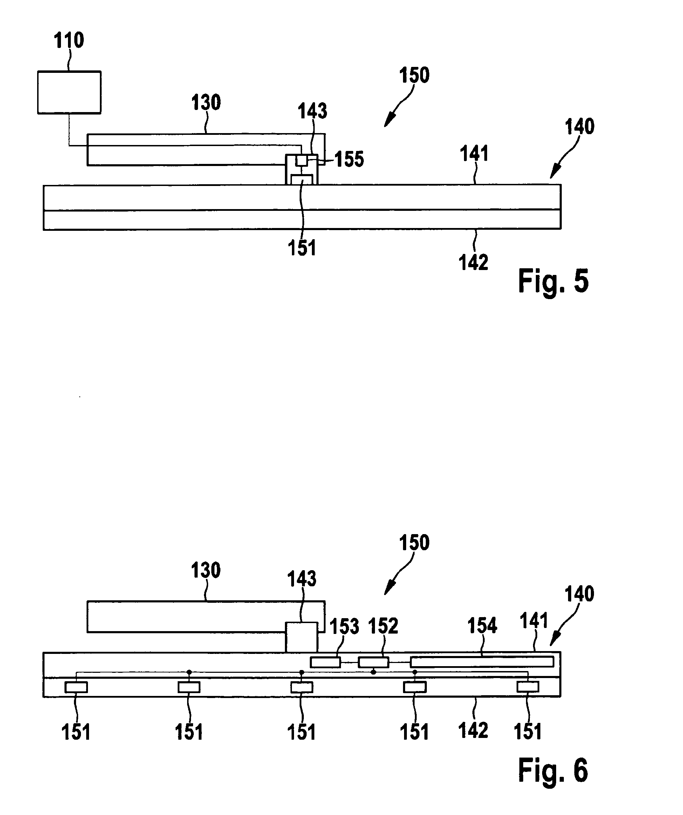

Ein weiterer geeigneter Einbauort für ein Aktorelement 151 ist in der Figur 5 gezeigt. In dieser Ausführungsform ist ein einzelnes Aktorelement 151 in der Anschlusseinrichtung 143 des Wischblatts 140 angeordnet. Das Aktorelement 151 ist hierbei ebenfalls über eine entsprechende Schnittstelle 155 und Verbindungsleitungen mit der Steuereinrichtung 110 verbunden. Aufgrund dieser Anordnung reduziert sich die Verschaltungsaufwand innerhalb des Wischblatts 140, wodurch sich gegebenenfalls eine Kostenersparnis ergibt.

Neben den bisher beschriebenen Wischblättern 140, bei denen die Energieversorgung und die Steuerung der Schwingungseinrichtung 150 über eine externe Steuereinrichtung 110 erfolgt, sind auch autarke Ausführungsformen des erfindungsgemäßen Wischblatts 140 denkbar. Diese eignen sich in vorteilhafter Weise zum Nachrüsten bestehender Wischanlagen 100. Zur Veranschaulichung zeigt Figur 6 eine mögliche Ausgestaltung, bei der im Basisteil 141 des Wischblatts 140 eine Aktivierungseinrichtung 152 sowie eine Energieversorgungseinrichtung 153, 154 angeordnet sind. Die Aktivierungseinrichtung 152 ist dabei ausgebildet, eine Bewegung des Wischblatts 140 zu erkennen beziehungsweise zu detektieren, und hierauf basierend die Schwingung der Aktorelemente 151 zu aktivieren. Zum Erkennen einer Wischbewegung des Wischblatts 140 kann die Aktivierungseinrichtung 152 beispielsweise eine Sensoreinrichtung, wie z. B. ein mikromechanisches Sensorelement aufweisen.

Die Energieversorgungseinrichtung des Wischblatt 140 aus Figur 6 kann beispielsweise eine Batterie 153 oder ein photovoltaisches Element 154 umfassen. Im vorliegenden Ausführungsbeispiel sind sowohl eine (aufladbare) Batterie 153 als auch ein photovoltaisches Element 154 zur Energieversorgung der Schwingungseinrichtung 150 vorgesehen. Ferner kann anstatt einer Batterie 153 auch ein Kondensator oder ein ähnlicher Energiespeicher verwendet werden.

Die anhand der Figuren erläuterten Ausführungsformen stellen bevorzugte beziehungsweise beispielhafte Ausführungsformen der Erfindung dar. Neben den beschriebenen und abgebildeten Ausführungsformen sind weitere Ausführungsformen vorstellbar, welche weitere Abwandlungen beziehungsweise Kombinationen von Merkmalen umfassen können. Insbesondere ist es möglich, Wischblätter mit entsprechenden Schwingungseinrichtungen nicht nur bei Wischanlagen für Kraftfahrzeuge, sondern bei beliebigen Wischanlagen einzusetzen.

Obwohl die in der vorhergehenden Beschreibung sowie den Figuren offenbarten Ausführungsbeispiele sich stets auf gelenkfreie Wischblatter beziehen, sind die hier beschriebenen Konzepte und Ansätze auch auf konventionelle Wischblätter mit Gelenken anwendbar. Hierbei können ebenfalls ein oder mehrere (piezoelektrische Aktorelemente) im Bereich eines Basisteils und/oder eines Wischlippenteiles angeordnet sein. Ferner ist es auch möglich, einzelne der hier offenbarten Komponenten (z. B. Aktorelemente, Energieversorgungseinrichtung, Aktivierungseinrichtung, etc...) zusätzlich auch innerhalb des zugehörigen Wischarms vorzusehen, bzw. auf Wischblatt und Wischarm zu verteilen.

Obwohl in der Figur 1 beispielhaft eine Gleichlaufanlage mit zwei Wischhebeln dargestellt ist, ist das hier beschrieben Konzept auch im Zusammenhang mit anderen Wischanlagen, z. B. Gegenlaufanlagen mit zwei Wischhebeln oder Einhebelwischanlagen, anwendbar.

## Patentansprüche

1. Wischblatt (140) für eine Wischanlage (100) zum Wischen einer Scheibe (200),
wobei das Wischblatt (140) eine Schwingungseinrichtung (150) mit wenigstens einem Aktorelement (151) zur Schwingungsanregung des Wischblatts (140) umfasst,
**dadurch gekennzeichnet,**
**dass** das Wischblatt (140) eine Aktivierungseinrichtung (152) mit einer Sensoreinrichtung zum Erkennen einer Wischbewegung des Wischblatts (140) umfasst,
wobei die Aktivierungseinrichtung (152) ausgebildet ist, das Aktorelement (151) der Schwingungseinrichtung (150) auf der Grundlage einer erkannten Bewegung zu aktivieren.

2. Wischblatt (140) nach Anspruch 1,
**dadurch gekennzeichnet,**
**dass** die Schwingungseinrichtung (150) ausgebildet ist, eine Schwingung mit wenigstens einer Frequenz im Ultraschall- und/oder Infraschall-Bereich zu erzeugen.

3. Wischblatt (140) nach Anspruch 1 oder 2,
**dadurch gekennzeichnet,**
**dass** das Wischblatt (140) ein Basisteil (141) mit einer Anschlusseinrichtung (143) zum Befestigen an einem Wischarm (130) und ein Wischlippenteil (142) aufweist,
wobei das Aktorelement (151) im Bereich des Basisteils (141), der Anschlusseinrichtung (143) oder des Wischlippenteils (142) angeordnet ist.

4. Wischblatt (140) nach einem der vorhergehenden Ansprüche,
**dadurch gekennzeichnet,**
**dass** das Aktorelement (151) ein Piezoelement ist.

5. Wischblatt (140) nach einem der vorhergehenden Ansprüche,
**dadurch gekennzeichnet,**
**dass** das Wischblatt (140) eine Energieversorgungseinrichtung (153, 154) für die Schwingungseinrichtung (150) umfasst.

6. Wischblatt (140) nach Anspruch 5,
**dadurch gekennzeichnet,**
**dass** die Energieversorgungseinrichtung eine Batterie (153) und/oder eine photovoltaisches Element (154) umfasst.

7. Wischblatt (140) nach einem der vorhergehenden Ansprüche,
**dadurch gekennzeichnet,**
**dass** das Wischblatt (140) eine Schnittstelle (155) zum Herstellen einer Verbindung zwischen der Schwingungseinrichtung (150) und einer Steuereinrichtung (110) der Wischanlage (100) aufweist.

8. Wischanlage (100) zum Wischen einer Scheibe (200) umfassend ein Wischblatt (140) nach einem der vorhergehenden Ansprüche.

## Claims

1. Wiper blade (140) for a wiper system (100) for wiping a glass pane (200),
wherein the wiper blade (140) comprises an oscillation device (150) with at least one actuator element (151) for inciting oscillation of the wiper blade (140), **characterized**
**in that** the wiper blade (140) comprises an activation device (152) having a sensor device for identifying a wiping movement of the wiper blade (140),
wherein the activation device (152) is designed to activate the actuator element (151) of the oscillation device (150) on the basis of an identified movement.

2. Wiper blade (140) according to Claim 1, **characterized**
**in that** the oscillation device (150) is designed to generate an oscillation with at least a frequency in the ultrasound and/or infrared range.

3. Wiper blade (140) according to Claim 1 or 2, **characterized**
**in that** the wiper blade (140) has a base part (141) having a connection device (143) for attachment to a wiper arm (130), and a wiping lip part (142),
wherein the actuator element (151) is arranged in the region of the base part (141), the connection device (143) or the wiping lip part (142).

4. Wiper blade (140) according to one of the preceding claims,
**characterized**
**in that** the actuator element (151) is a piezo element.

5. Wiper blade (140) according to one of the preceding claims,
**characterized**
**in that** the wiper blade (140) comprises a power supply device (153, 154) for the oscillation device (150).

6. Wiper blade (140) according to Claim 5,
**characterized**
**in that** the power supply device comprises a battery (153) and/or a photovoltaic element (154).

7. Wiper blade (140) according to one of the preceding claims,
**characterized**
**in that** the wiper blade (140) has an interface (155) for establishing a connection between the oscillation device (150) and a control device (110) of the wiper system (100).

8. Wiper system (100) for wiping a glass pane (200), comprising a wiper blade (140) according to one of the preceding claims.

## Revendications

1. Balai d'essuie-glace (140) conçu pour une installation d'essuyage (100) en vue d'essuyer une vitre (200) ;
le balai d'essuie-glace (140) comprenant un dispositif d'oscillation (150) doté d'au moins un élément actionneur (151) servant à exciter l'oscillation du balai d'essuie-glace (140) ;
**caractérisé en ce que** :
le balai d'essuie-glace (140) comprend un dispositif d'activation (152) doté d'au moins un dispositif de détection servant à identifier un mouvement d'essuyage du balai d'essuie-glace (140) ;
le dispositif d'activation (152) étant conçu pour activer l'élément actionneur (151) du dispositif d'oscillation (150) sur la base de la reconnaissance d'un mouvement.

2. Balai d'essuie-glace (140) selon la revendication 1, **caractérisé en ce que** le dispositif d'oscillation (150) est conçu pour produire une oscillation à au moins une fréquence dans la plage des ultrasons et/ou des infrasons.

3. Balai d'essuie-glace (140) selon la revendication 1 ou 2, **caractérisé en ce que** le balai d'essuie-glace (140) comporte une partie de base (141) dotée d'un dispositif de jonction (143) pour sa fixation à un bras d'essuyage (130) ainsi qu'une partie de lèvre d'essuyage (142) ;
l'élément actionneur (151) étant disposé dans la région de la partie de base (141) du dispositif de jonction (143) ou de la partie de lèvre d'essuyage (142).

4. Balai d'essuie-glace (140) selon l'une quelconque des revendications précédentes, **caractérisé en ce que** l'élément actionneur (151) est un élément piézoélectrique.

5. Balai d'essuie-glace (140) selon l'une quelconque des revendications précédentes, **caractérisé en ce que** le balai d'essuie-glace (140) comprend un dispositif d'alimentation en énergie (153, 154) prévu pour le dispositif d'oscillation (150).

6. Balai d'essuie-glace (140) selon la revendication 5, **caractérisé en ce que** le dispositif d'alimentation en énergie comprend une batterie (153) et/ou un élément photovoltaïque (154).

7. Balai d'essuie-glace (140) selon l'une quelconque des revendications précédentes, **caractérisé en ce que** le balai d'essuie-glace (140) comporte une interface (155) permettant d'établir une liaison entre le dispositif d'oscillation (150) et un dispositif de commande (110) de l'installation d'essuyage (100).

8. Installation d'essuyage (100) conçue pour essuyer une vitre (200) comprenant un balai d'essuie-glace (140) selon l'une quelconque des revendications précédentes.
